# EUROPÄISCHE PATENTSCHRIFT

(11) **EP 2 859 052 B1**
(45) Veröffentlichungstag und Bekanntmachung des Hinweises auf die Patenterteilung: **24.08.2016**
(21) Anmeldenummer: 13732081.8
(22) Anmeldetag: 05.06.2013
(51) Int. Cl.: C09C 1/04, C09C 1/06

(54) **VERFAHREN ZUR HERSTELLUNG VON ZNS-TEILCHEN MIT EINER BESCHICHTUNG AUS METALLOXID MIT EINEM GEHALT AN KOBALT, DIE SO ERHALTENEN PRODUKTE UND DEREN VERWENDUNG**
METHOD FOR THE PRODUCTION OF ZNS PARTICLES HAVING A METAL OXIDE COATING AND A COBALT CONTENT, PRODUCTS OBTAINED THEREBY, AND USE OF SAID PRODUCTS
PROCÉDÉ POUR PRODUIRE DES PARTICULES DE ZNS PRÉSENTANT UN REVÊTEMENT D'OXYDE MÉTALLIQUE CONTENANT DU COBALT, PRODUITS AINSI OBTENUS ET LEUR UTILISATION

(30) Priorität: 12.06.2012 DE 102012105034
(43) Veröffentlichungstag der Anmeldung: 15.04.2015
(73) Patentinhaber: Sachtleben Chemie GmbH, 47198 Duisburg (DE)
(72) Erfinder: ROHE, Markus, 47445 Moers (DE); KRETSCHMER, Matthias, 14482 Potsdam (DE)
(74) Vertreter: Nobbe, Matthias
(86) Internationale Anmeldenummer: PCT/DE2013/100202
(87) Internationale Veröffentlichungsnummer: WO 2013/185753

(56) Entgegenhaltungen:
- AT-B- 235 438
- DE-C- 809 838
- GB-A- 797 845

## Beschreibung

Die vorliegende Erfindung betrifft ein Verfahren zur Herstellung von ZnS-Teilchen mit einer Beschichtung aus Metalloxid, ausgewählt aus SiO₂, TiO₂, Al₂O₃ oder Mischungen davon mit einem Gehalt an Kobalt²⁺, die so erhaltenen Co/Metalloxid/ZnS-Komposit-Teilchen und deren Verwendung.

Zinksulfid ist ein vielfach verwendetes Pigment. Es besitzt eine geringe Mohs'sche Härte von etwa 3 und wird aufgrund seines hohen Brechungsindex (n∼2,37) in Weißpigmenten, z.B. Lithopone, verwendet; in Cadmium-Pigmenten dient Zinksulfid zur Variation der Farbtöne. Mit Kupfer, Silber, Mangan oder Aluminium dotiertes Zinksulfid wird als Leuchtstoff verwendet.

Zur Verminderung der Vergrauung des Zinksulfids durch Lichteinfluss wird Zinksulfid ein Kobaltsalz zugesetzt. Diese Vergrauung des ZnS in der Gegenwart von Licht und Wasser ist eine Photolyse-Reaktion, die an der Oberfläche des Zinksulfids abläuft. Die Ausscheidung von elementarem Zink führt zu dieser Graufärbung des Co-freien Zinksulfids. Eine Dotierung mit Kobalt führt dagegen zu lichtechten Zinksulfiden. ZnS-Produkte aus dem Stand der Technik enthalten bis zu 300 - 350 ppm Co²⁺. Eine langfristige Bestrebung, die durch die REACH Kommission gefordert ist, sieht vor, dass Kobalt-haltige Verbindungen zunehmend durch nichttoxische Verbindungen substituiert werden müssen. Aufgrund der REACH-Bestimmungen wird es ferner erforderlich sein, Kobalt-haltige Verbindungen mit >250 ppm CoS (= 160 ppm Co²⁺) gesondert zu kennzeichnen.

Im Stand der Technik ist eine Reihe von mit SiO₂ behandelten Zinksulfiden bekannt. Beispielshaft sind die CN101177551, JP2005171316, JP11335823 und EP1380670 genannt. Die darin offenbarten Materialien sind jedoch Mischkomposite aus ZnS und SiO₂ oder mit SiO₂ beschichtetes ZnS.

Wie im Stand der Technik bekannt ist, gibt es eine Korrelation zwischen der Kobalt-Konzentration im Partikel und der Lichtechtheit der Materialien. Kobalt-Gehalte kleiner als 190 ppm Co²⁺ führen zu lichtsensiblen Produkten.

Entsprechend beschreibt die AT 235438B ein Zinksulfidpigment, das in einer wässerigen Lösung eines Alkalisalzes der Isopolysäuren des Siliziums bzw. Phosphors suspendiert und diese Suspension mit einer Lösung eines Gemisches von Erdalkali- und/oder Aluminiumchlorid geflockt wird, das umhüllte Pigment anschliessend abfiltriert, ausgewaschen, getrocknet und gemahlen wird, wobei eine Flockungslösung verwendet wird, die zusätzlich mindestens ein Salz der Metalle Eisen, Kobalt, Nickel, Kupfer, Cadmium, Titan, Zirkonium, Cer und der Metalle der seltenen Erden, vornehmlich Chloride oder Nitrate, in einem Prozentsatz von mindestens 0,03 Gew.-%, vornehmlich 0,05 - 0, 5 Gew.-% Metall, bezogen auf das Pigment, enthält.

Im Stand der Technik sind keine ZnS-Produkte mit einem solchen verringerten Kobaltgehalt von weniger als 190 ppm Co²⁺ bei gleicher Vergrauungsbeständigkeit bekannt. Es besteht daher ein Bedarf an derartigem vergrauungsbeständigem Zinksulfid.

Seitens der Erfinder wurden Überlegungen angestellt, um den Kobalt-Gehalt im Zinksulfid zu vermindern und gleichzeitig die Lichtbeständigkeit nicht nachteilig zu verändern. Die Erfinder haben herausgefunden, dass Zinksulfid vor allem an der Oberfläche der Partikel, wo die Photolyse abläuft, optimierte Eigenschaften aufweisen muss, um den Kobalt-Gehalt erniedrigen zu können. Die Erfinder konnten belegen, dass der überwiegende Teil des Kobalts nur an der Oberfläche des ZnS gebunden ist. Seitens der Erfinder wurde gefunden, dass Kobaltatome, die im Inneren eines ZnS Partikels sind, für die Photostabilisierung des ZnS nicht verantwortlich sind und nur Kobaltatome an der Oberfläche der Partikel zur Verhinderung der Vergrauung beitragen können. Zwar werden der Mechanismus der Photolyse und die Rolle des Kobalts im Stand der Technik kontrovers diskutiert, es wird derzeit allerdings davon ausgegangen, dass das Kobalt während des Photolyse-Vorganges seine Oxidationsstufen partiell wechselt.

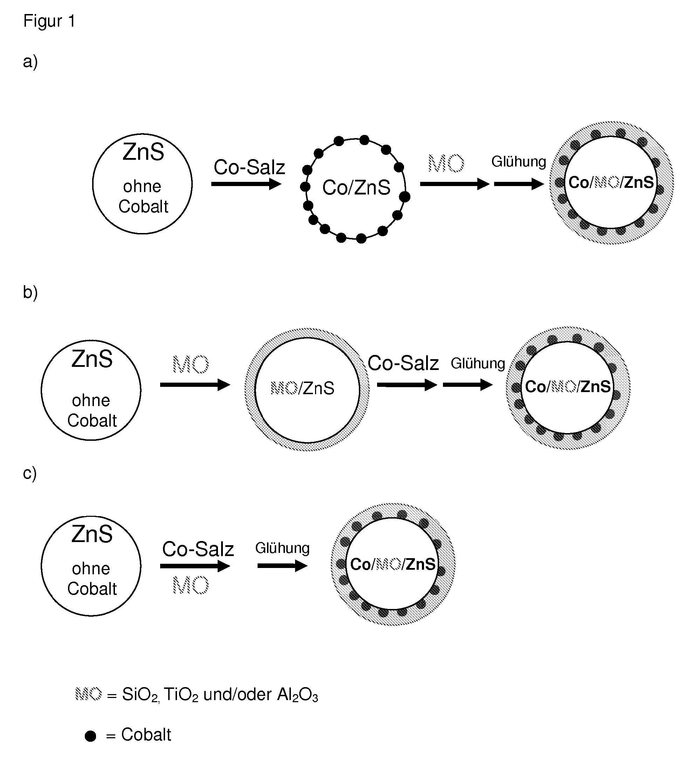

Seitens der Erfinder wurde herausgefunden, daß eine Oberflächenmodifizierung von Zinksulfidteilchen mit SiO₂, TiO₂, Al₂O₃ oder Mischungen davon in Kombination mit einer geringen Menge an Kobaltsalzen wie Kobaltsulfat zu photostabilen Zinksulfiden führt. Auf diese Weise wird Kobalt als Co²⁺ fest mit einer anorganischen Nachbehandlungskomponente wie SiO₂, TiO₂ und/oder Al₂O₃ an der Oberfläche der Teilchen fixiert, so dass somit weniger Kobalt Co²⁺ benötigt wird. Das erfindungsgemäße Verfahren ist in drei möglichen Ausführungsformen schematisch in Fig. 1 dargestellt.

Die Untersuchungen der Erfinder haben gezeigt, daß eine Reihe von Verfahrensparametern wie unten erläutert einzuhalten ist, um ein optimiertes Produkt zu erhalten. Die Erfindung betrifft somit ein Verfahren zur Herstellung eines Co/Metalloxid/ZnS-Komposits, das Co/Metalloxid/ZnS-Komposit als solches und dessen Verwendung als Pigment in Kunststoffen zur Verbesserung der mechanischen und/oder optischen Eigenschaften, wobei das Metalloxid aus SiO₂, TiO₂, Al₂O₃ oder Mischungen davon ausgewählt ist.

Als Ausgangsmaterial ZnS wird Zinksulfid eingesetzt, das bevorzugt Kobalt-frei ist, um den Gesamtgehalt an Kobalt niedrig zu halten. Dabei kann ein pulverförmiger Feststoff als auch Co-freier ZnS-Filterkuchen eingesetzt werden. Das eingesetzte Zinksulfid kann getrocknetes oder frisch hergestelltes Zinksulfid sein. Ein beispielhaftes Herstellungsverfahren ist in der WO2008-065208 beschrieben. Die Teilchengröße des eingesetzten ZnS beträgt in der Regel 5nm bis 5µm, bevorzugt 10nm bis 5µm, besonders 100 nm bis 1µm.

Auf Basis dieser ZnS-Teilchen kann im nächsten Schritt die Imprägnierung mit einem Kobaltsalz, vorzugsweise Kobaltsulfat, -citrat, oder Kobaltoxid, oder Gemischen davon erfolgen. Diese Ausführungsform ist vorteilhaft, da die Kobaltatome auf den ZnS-Teilchen so durch die Metalloxidschicht wie eine SiO₂-, TiO₂- oder Al₂O₃-Schicht abgeschirmt sind. Es ist auch möglich, zunächst eine anorganische Nachbehandlung mit dem Metalloxid-Vorläufer und im nächsten Schritt eine Imprägnierung mit dem Kobaltsalz durchzuführen, oder die Oberflächenbehandlung mit dem Metalloxid-Vorläufer und dem Kobaltsalz gleichzeitig durchzuführen.

In jedem Fall ist die Menge an Kobaltsalz so bemessen, dass die Konzentration an Co²⁺ im Endprodukt im Bereich zwischen 1 und 150 ppm, bevorzugt 5 und 120 ppm und besonders bevorzugt 20 bis 100 ppm beträgt, um eine ausreichende UV-Beständigkeit zu erzielen.

Ferner muss bei der Oberflächenbehandlung der pH-Wert im alkalischen Bereich gehalten werden, was bei Verwendung von Wasserglas als SiO₂-Vorläufer keinen Zusatz von Alkalien wie Natriumhydroxid erfordert, aber nicht ausschließt.

Die anorganische Oberflächenbehandlung erfolgt vorzugsweise vor einer Trocknung des erfindungsgemäß verwendeten Zinksulfids. Dazu kann der Zinksulfidfilterkuchen im wässrigen Medium redispergiert und durch die Zugabe einer oder mehrerer der oben genannten Oberflächenbehandlungsreagenzien anschließend nachbehandelt werden. Die Oberflächenbehandlung erfolgt gemäß dem Stand der Technik zur anorganischen Oberflächenbehandlung von Pigmenten. Die anschließende Aufarbeitung erfolgt wie bereits oben dargestellt.

Die anorganische Oberflächenbehandlung des Zinksulfids findet beispielsweise in wässriger Aufschlämmung statt. Die Reaktionstemperatur soll dabei vorzugsweise 60°C nicht übersteigen. Der pH-Wert der Suspension kann, beispielsweise unter Verwendung von NaOH auch auf pH-Werte im Bereich grösser 9 eingestellt werden.

Unter starkem Rühren werden dann die Oberflächenbehandlungschemikalien (anorganische Verbindungen), vorzugsweise wasserlösliche anorganische Verbindungen oder -Salze von dem Metall, wie Silicium, Titan oder Aluminium, und/oder Kobalt zugegeben. Der pH-Wert und die Mengen an Oberflächenbehandlungschemikalien werden erfindungsgemäß so gewählt, dass letztere vollständig in Wasser gelöst vorliegen.

Die ZnS-Suspension wird intensiv gerührt, so dass sich die Oberflächenbehandlungschemikalien homogen in der Suspension verteilen, vorzugsweise für mindestens 5 Minuten. Im nächsten Schritt wird der pH-Wert der Suspension abgesenkt. Als vorteilhaft hat sich dabei erwiesen, den pH-Wert langsam und unter starkem Rühren abzusenken. Besonders vorteilhaft wird der pH-Wert innerhalb von 10 bis 90 Minuten auf Werte von 5 bis 8, bevorzugt auf Werte um den Neutralpunkt im Bereich von 6,5 bis 7,5 abgesenkt.

Im Anschluss daran schließt sich erfindungsgemäß eine Reifezeit von bis zu 120 Minuten, besonders bis zu 90 Minuten, vorzugsweise eine Reifezeit von einer Stunde an. Die Temperaturen sollen dabei vorzugsweise 60°C nicht überschreiten. Die wässrige Suspension wird dann gewaschen und getrocknet. Zur Trocknung des oberflächenmodifizierten erfindungsgemässen Zinksulfids bieten sich beispielsweise die Sprühtrocknung, die Gefriertrocknung und/oder die Mahltrocknung an. Abhängig vom Trocknungsverfahren kann eine anschließende Mahlung und/oder Sichtung der getrockneten Pulver notwendig sein. Die Mahlung kann nach an sich bekannten Verfahren durchgeführt werden.

Grundsätzlich kann die anorganische Oberflächenbehandlung des Zinksulfids erfindungsgemäß durch eine Behandlung mit Metalloxid-Vorläuferverbindung(en) in Form verschiedener Salze oder Verbindungen in wässriger Lösung erfolgen.

Die anorganische Oberflächenmodifizierung des ultrafeinen erfindungsgemässen Zinksulfids kann aus Verbindungen bestehen, die folgende Elemente enthalten: Kobalt-, Silicium-, Aluminium-, Titan-Verbindungen bzw. Salze. Beispielhaft genannt sind Natriumsilikat, Natriumaluminat, Titanylsulfat und Kobaltsulfat.

Um eine bessere Fixierung des Kobalts in der anorganischen "Hülle" zu erreichen, wird das oberflächenbehandelte ZnS für eine Zeit bis zu 240 Minuten, besonders über 15 bis 90 Minuten in einem Temperaturbereich von 400°C bis 1000°C, besonders 500° bis 800°C unter einer Atmosphäre, die inert sein kann, geglüht. Auf diese Weise werden die oxidischen Vorläufer-Verbindungen zuverlässig in die Oxide überführt und das Co/Metalloxid/ZnS-Komposit gebildet.

Somit betrifft die Erfindung Co/Metalloxid/ZnS-Kompositteilchen mit einem ZnS-Kern und einer den Kern umgebenden Metalloxid-Beschichtung mit einem Gehalt an Kobalt, wobei das Metalloxid aus SiO₂, Al₂O₃, TiO₂ oder Mischungen davon ausgewählt ist. Wenn erfindungsgemäß von einem Gehalt an Kobalt gesprochen wird, sind damit Gehalte an Co²⁺ gemeint.

Solche Kompositteilchen können einen ZnS-Kern und eine den Kern umgebenden Metalloxid-Beschichtung aufweisen, wobei der Kern kobaltfrei ist. Bei Glühen der Teilchen ist es möglich, dass Co²⁺ aus der Metalloxid-Beschichtung mit einem Gehalt an Kobalt in die unter der Schicht liegenden Kernschichten diffundiert, der Kern aber somit im Wesentlichen kobaltfrei bleibt.

Dabei haben die Kompositteilchen einen Gehalt an Kobalt von 1 bis 150 ppm, bezogen auf das Gesamtgewicht der Kompositteilchen, und die Metalloxid-Beschichtung in einer Masse von 0,1 bis 10 Gew.-%, besonders 0,5 bis 5 Gew.-% Metalloxid, bezogen auf das Gesamtgewicht der Kompositteilchen, vorgesehen sein.

Eine Metalloxid-Beschichtung kann in einer Masse von 0,5 bis 5 Gew.-% Al₂O₃, bezogen auf das Gesamtgewicht der Kompositteilchen enthalten.

Eine weitere Metalloxid-Beschichtung kann in einer Masse von 0,5 bis 3 Gew.-%, besonders 1 bis 2,5 Gew.-% SiO₂, bezogen auf das Gesamtgewicht der Kompositteilchen, enthalten.

Eine andere Metalloxid-Beschichtung kann in einer Masse von 0,5 bis 3 Gew.-%, besonders 1 bis 2,5 Gew.-% TiO₂, bezogen auf das Gesamtgewicht der Kompositteilchen, enthalten.

Dabei können die Kompositteilchen besonders eine Teilchengrösse von 10 nm bis 5 µm, besonders 100 nm bis 1 µm besitzen.

Ferner betrifft die Erfindung vorteilhaft ein Verfahren zur Herstellung der Co/Metalloxid/ZnS-Kompositteilchen, wobei das Metalloxid aus SiO₂, Al₂O₃, TiO₂ und Mischungen davon ausgewählt wird, das die folgenden Schritte umfasst:
a. Aufbringen einer Co²⁺-haltigen Schicht auf ZnS-Teilchen durch Behandeln der ZnS-Teilchen mit einer Lösung eines Co-Salzes;
b. Zugeben von einer alkalischen Lösung von einer Metalloxid-Vorläuferverbindung, wie Natriumsilikat, Natriumaluminat, Titanylsulfat, oder Mischungen davon, wobei das Metall aus Si, Ti, Al oder mehreren davon ausgewählt ist,
c. Absenken des pH-Wertes der Suspension auf einen Bereich von pH 5 bis 8, optional gefolgt von einer Reifezeit von bis zu 120 min,
d. Kalzinieren der abfiltrierten und bevorzugt getrockneten Teilchen in einem Temperaturbereich von 400° bis 1000°C, besonders 500° bis 1000°C, optional gefolgt von einer Mahlung und/oder Sichtung der Teilchen.

Das Behandeln der ZnS-Teilchen mit der Lösung eines Co-Salzes und die Zugabe der alkalischen Lösung von SiO₂-, TiO₂- und/oder Al₂O₃-Vorläuferverbindungen können auch in einem Schritt erfolgen. Ebenso ist ein erfindungsgemäßes Verfahren möglich, bei dem die Schritte a. und b. in der Reihenfolge vertauscht sind. In jedem Fall können die ZnS-Teilchen in einer wässrigen Lösung oder als trockenes Pulver vorgelegt werden. Als Metalloxid-Vorläuferverbindungen werden solche Verbindungen bezeichnet, die nach dem Kalzinieren ein Metalloxid oder Mischungen davon ergeben. Beispielhaft werden Alkalisilikate, Alkalialuminate, Alkalititanate, Hydroxide oder Hydrate davon, je nach Bedingungen auch Aluminiumsulfat, genannt, die einzeln oder als Mischungen eingesetzt werden können.

Auf die erfindungsgemäße Weise können unterschiedliche Komposit-Materialien synthetisiert werden, die Kobalt-Gehalte von ca. 20 bis 100 ppm gegenüber 300 - 350 ppm Kobalt als Co²⁺ bei ZnS-Materialien gemäß dem Stand der Technik aufweisen. Somit beträgt der Kobalt-Gehalt lediglich ca. 5-28 % des Kobalt-Gehaltes der Teilchen im Stand der Technik.

Die Erfindung betrifft somit auch die Co/Metalloxid/ZnS-Kompositteilchen mit einem ZnS-Kern und einer den Kern umgebenden Beschichtung, ausgewählt aus SiO₂-, TiO₂-, Al₂O₃- oder Mischungen davon, mit einem Gehalt an Kobalt Co²⁺. Ausgehend von einem kobaltfreien ZnS ist die Bereitstellung von Kompositteilchen mit einem ZnS-Kern und einer den Kern umgebenden Metalloxid-Beschichtung möglich, wobei der Kern kobaltfrei ist. In diesem Fall bedeutet ein kobaltfreier Kern, daß Kobalt allenfalls im Verlauf des Herstellungsverfahrens, beispielsweise infolge thermischer Diffusion beim Glühen, von außen in den Kern diffundiert sein kann und in einer äußeren Schicht von wenigen nm vorhanden sein kann.

Der Gehalt an Kobalt liegt in der Regel erfindungsgemäß in einem Bereich von 1 bis 150 ppm, bevorzugt 5 und 120 ppm und besonders bevorzugt 20 bis 100 ppm, um eine ausreichende UV-Beständigkeit zu erzielen, jeweils bezogen auf das Gesamtgewicht der Kompositteilchen. Dabei liegt die MO-Beschichtung wie z.B. die SiO₂-Beschichtung in einer Masse von 0,1 bis 10 Gew.-%, bezogen auf das Gesamtgewicht der Kompositteilchen, vor, und die Teilchengrösse der Co/Metalloxid/ZnS-Kompositteilchen beträgt von 10 nm bis 5 µm.

Die Erfindung empfiehlt die Verwendung der Co/SiO₂/ZnS-Kompositteilchen als Pigment in Formmassen, insbesondere in anorganischen und/ oder organischen Polymeren, insbesondere in Glasfaser-verstärkten Kunststoffen und daraus gefertigten Formteilen, sowie in Lacken, Farben, Fasern, Papier, Fugen- und Dichtungsmassen, Klebstoffen, Keramiken, Emaille, Adsorptionsmittel, Ionenaustauschern, Schleif- und Poliermitteln, Kühlschmierstoffen und Kühlschmierstoffkonzentraten, Feuerfestprodukten, Hartbetonstoffen, medizinischen Erzeugnissen und Kosmetika, ebenso wie zur Verbesserung der mechanischen und/oder optischen Eigenschaften von Werkstoffen, beispielsweise der Härte, der Biegefestigkeit, Schlagzähigkeit und Lichtbeständigkeit von Duromeren und thermoplastischen Kunststoffen, oder auch in Duromeren, thermoplastischen Kunststoffen und Elastomeren zur Stabilisierung gegen Wärme.

Die Erfindung wird anhand der folgenden Beispiele und Figuren weiter erläutert. Dabei zeigen:
Figur 1 eine schematische Darstellung der Synthese von oberflächenmodifiziertem Zinksulfid;
Figur 2 die Lichtbeständigkeit verschiedener Zinksulfide;
Figur 3 die Schlagzähigkeit von unter Verwendung ZnS Teilchen synthetisierten Kompositen im Vergleich mit unter Verwendung von Produkten aus dem Stand der Technik synthetisierten Kompositen,
Figur 4 die Schlagzähigkeit (hell) und Kerbschlagzähigkeit (dunkel) von ZnS-Kompositen und Vergleichsproben,

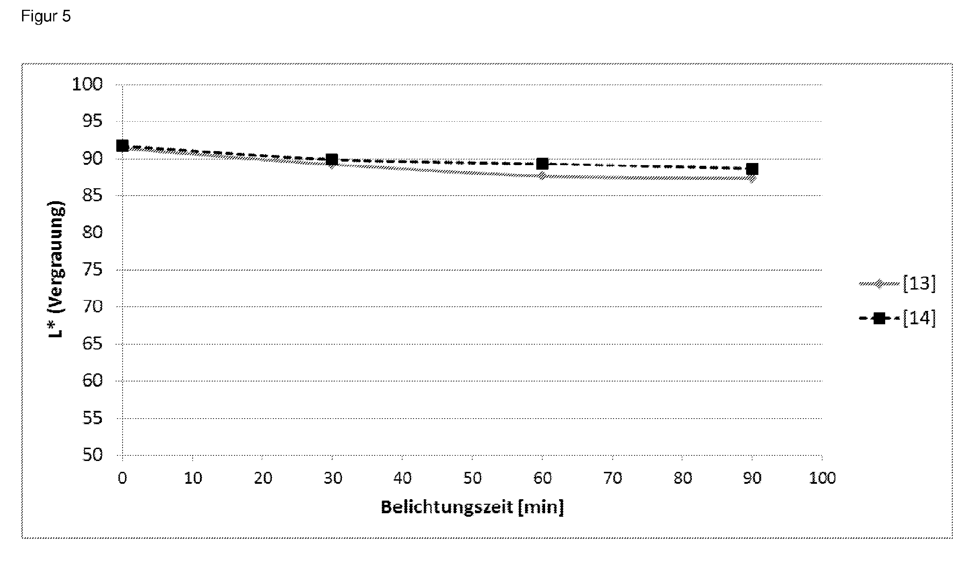

Figur 5 die Lichtbeständigkeit von Co/TiO₂/Kompositen, und

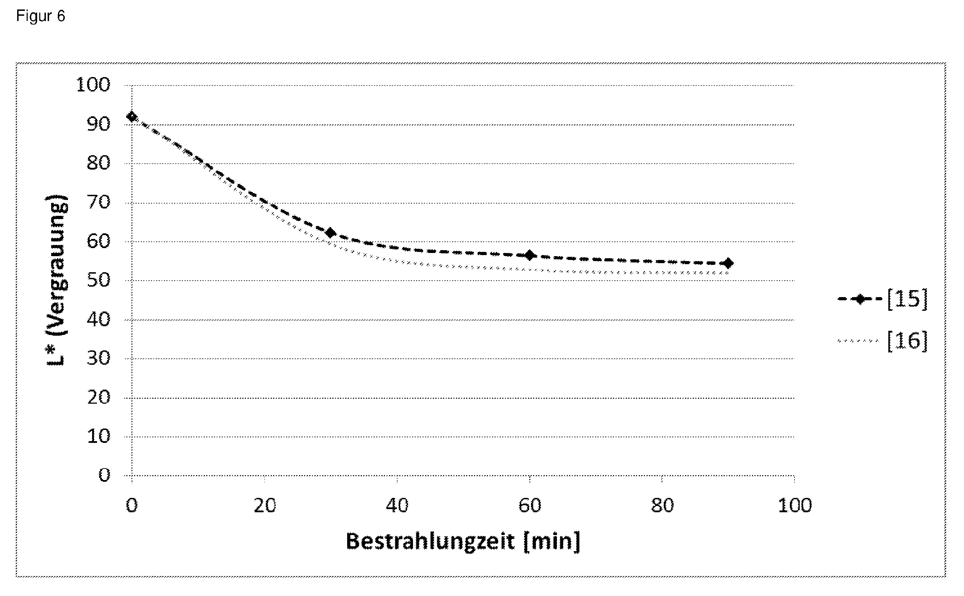

Figur 6 Vergleichsversuche zur Lichtbeständigkeit von Verbindungen, die gemäß AT 235438B hergestellt wurden.

Die in den Figuren mit Nummern bezeichneten Teilchen sind wie folgt zusammengesetzt, wobei MO für SiO₂, TiO₂, Al₂O₃ oder Mischungen davon steht:
[1] ZnS aus Stand der Technik (ohne Co)
[2] ZnS aus Stand der Technik (300 ppm Co)
[3] Co/MO/ZnS Komposit (60 ppm Co)
[4] Co/MO/ZnS Komposit (26 ppm Co)
[5] MO/ZnS Komposit (ohne Cobalt)
[6] Polymer PP-GF30
[7] Polymer + SiO₂/ZnS Komposit (1,2 % SiO₂)
[8] Polymer + SiO₂/ZnS Komposit (6,7 % SiO₂)
[9] Polymer + Al₂O₃/ZnS Komposit (2,8 % Al₂O₃)
[10] Polymer + ZnS aus Stand der Technik
[11] Polymer + TiO₂ (Rutil R 620 K)
[12] Polymer + TiO₂ (Rutil RDDI)
[13] Co/TiO₂/ZnS Komposit (0,5 % Ti02, 60 ppm Co)
[14] Co/TiO₂/ZnS Komposit (1 % Ti02, 60 ppm Co)
[15] Verbindung hergestellt gemäß dem Verfahren der AT235438B mit 900 ppm Co
[16] Verbindung hergestellt gemäß dem Verfahren der AT235438B, aber mit 290 ppm Co
[7]-[9] sind nicht erfindungsgemäß

### Co/SiO₂/ZnS-Komposite

Co/SiO₂/ZnS Komposite wurden analog dem Schema in Abbildung 1 synthetisiert. Dazu wurden Co/SiO₂/ZnS Komposite ausgehend von zwei ZnS Grundkörpern hergestellt. Zum einen wurde Co-freies ZnS Pulver in Wasser mittels Dissolver dispergiert, zum anderen wurde Co-freier ZnS Filterkuchen aus der Fällung verwendet. Nach intensiver Dispergierung der Ausgangsmaterialien in Wasser wurde entweder zuerst Kobaltsulfat und/oder Wasserglas zur Suspension gegeben. Nach 30 Minuten wurde, falls zuvor keine Mischung eingesetzt wurde, entsprechend die andere Komponente zur Lösung getropft. Nach Absenken des pH-Wertes auf 6,5 mittels Zugabe von wässriger Schwefelsäure wurde die Suspension für 1 Stunde gerührt und anschließend der Feststoff abfiltriert und gewaschen. Nach Trocknung im Trockenschrank bei 110 °C für 12 Stunden wurde das erhaltene Pulver mittels IKA Mühle aufgemahlen. Ein Teil des Materials wurde bei 620 °C geglüht.

Die erhaltenen Komposite wurden durch Farbmesswerte, relatives Streuvermögen, chemische Analyse auf Al₂O₃, SiO₂, TiO₂, Natrium und Kobalt charakterisiert. Ferner wurden REM und TEM Aufnahmen von den Proben durchgeführt und Pulverdiffraktogramme erstellt.

Anwendungstechnisch wurden die Proben hinsichtlich Kurzbewitterung, Lichtechtheit, Schlagzähigkeit und Abrasivität untersucht.

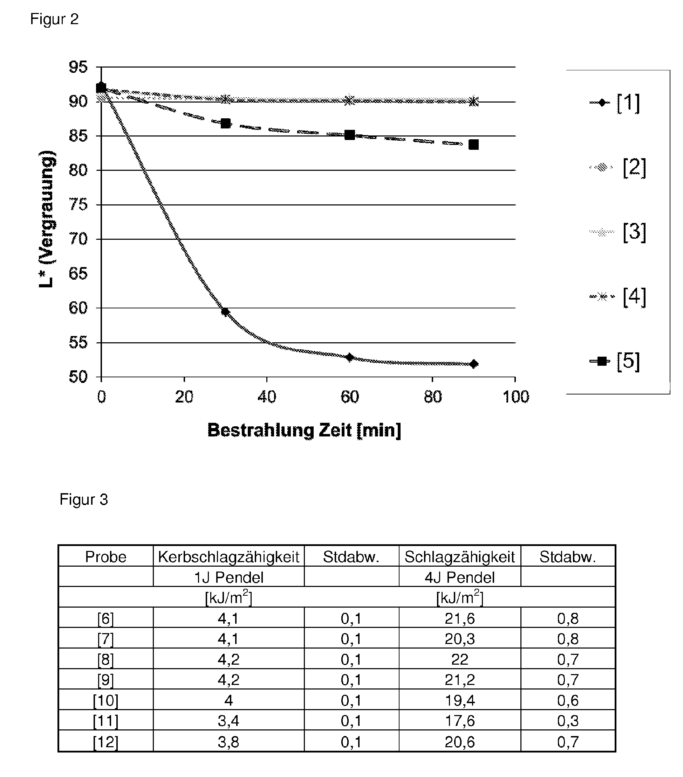

Wie in Figur 2 gezeigt, weisen die erfindungsgemäßen Kompositteilchen trotz erheblich verringertem Kobaltgehalt eine sehr gute Lichtbeständigkeit im Vergleich mit den Materialien aus dem Stand der Technik auf.

### Verwendungsbeispiele

Ein Anwendungsgebiet der erfindungsgemäßen Produkte ist die Verwendung in glasfaserverstärkten Kunststoffen. Daher wurden Abrasivitätstests und Schlagzähigkeitstests mit unterschiedlichen Komposit-Materialien durchgeführt. Getestet wurden zwei SiO₂/ZnS Komposite, die unterschiedliche pH-Wert Führungen während der Synthese durchlaufen haben, und ein Al₂O₃/ZnS Komposit. Die Ergebnisse sind in der Tabelle gemäß Figur 3 dargestellt. Wie gezeigt, ist in glasfaserverstärkten Polypropylen kein negativer Einfluss durch die SiO₂-Oberflächenmodifizierung auf die Glasfaser zu erkennen.

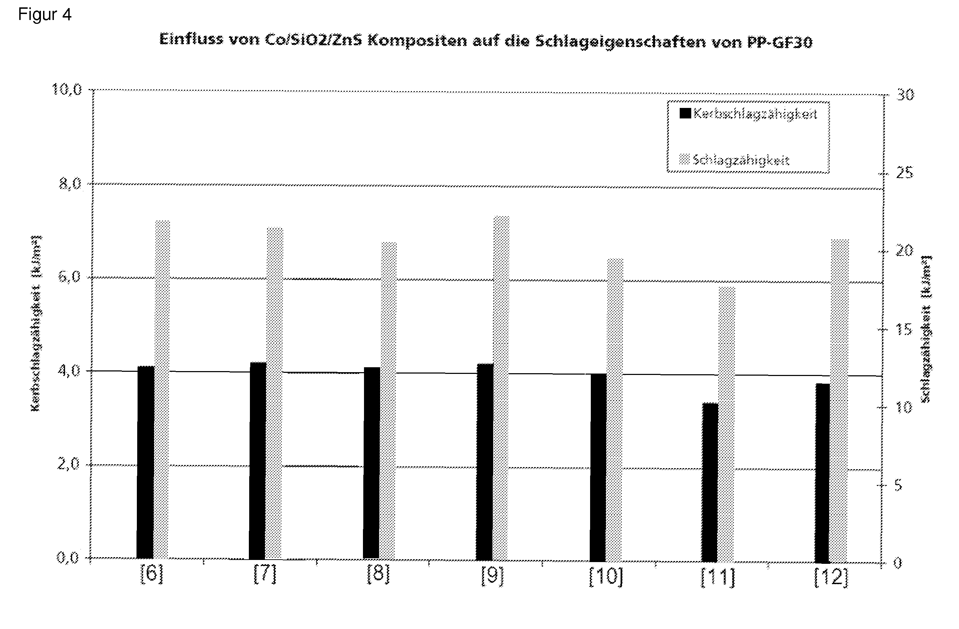

Die Schlagzähigkeiten bewegen sich auf dem Niveau der unpigmentierten Vergleichsprobe PP-GF30 und dem Sachtolith HD-S, wie in Figur 4 gezeigt.

Bei den erfindungsgemäßen Co/SiO2/ZnS Kompositen zeigen die Bewitterung und der Photolysetest, dass die Materialien mit wenig Kobalt (< 100 ppm) lichtstabil sind. SiO₂/ZnS und Co/ZnS Komposite dagegen vergrauen teilweise sehr deutlich. Die Untersuchungen zeigen, dass Kobalt an der Oberfläche des ZnS entscheidend ist und dass es notwendig ist, dass das Kobalt durch den Glühprozess in das ZnS Kristallgitter eingebaut wird. Die Farbmetrik (relatives Streuvermögen, Lab) ist so, dass die Komposite vergleichbare Werte wie die Materialien aus dem Stand der Technik zeigen.

## Patentansprüche

1. Co/Metalloxid/ZnS-Kompositteilchen mit einem ZnS-Kern und einer den Kern umgebenden Metalloxid-Beschichtung mit einem Gehalt an Kobalt von 1 bis 150ppm, bezogen auf das Gesamtgewicht der Kompositteilchen, wobei das Metalloxid aus SiO₂, TiO₂, Al₂O₃ oder Mischungen davon ausgewählt ist.

2. Kompositteilchen nach Anspruch 1 mit einem ZnS-Kern und der den Kern umgebenden Metalloxid-Beschichtung, wobei der Kern kobaltfrei ist.

3. Kompositteilchen nach Anspruch 1 oder 2 mit einem Gehalt an Kobalt von 5 bis 120ppm, bezogen auf das Gesamtgewicht der Kompositteilchen.

4. Kompositteilchen nach Anspruch 1, 2 oder 3 mit der Metalloxid-Beschichtung in einer Masse von 0,1 bis 10 Gew.-%, besonders 0,5 bis 5 Gew.-% Metalloxid, bezogen auf das Gesamtgewicht der Kompositteilchen.

5. Kompositteilchen nach Anspruch 4 mit der Metalloxid-Beschichtung in einer Masse von 0,5 bis 5 Gew.-% Al₂O₃, bezogen auf das Gesamtgewicht der Kompositteilchen.

6. Kompositteilchen nach Anspruch 4 mit der Metalloxid-Beschichtung in einer Masse von 0,5 bis 3 Gew.-%, besonders 1 bis 2,5 Gew.-% SiO₂, bezogen auf das Gesamtgewicht der Kompositteilchen.

7. Kompositteilchen nach Anspruch 4 mit der Metalloxid-Beschichtung in einer Masse von 0,5 bis 3 Gew.-% Ti02, bezogen auf das Gesamtgewicht der Kompositteilchen.

8. Kompositteilchen nach einem der vorhergehenden Ansprüche mit einer Teilchengrösse von 10 nm bis 5 µm, besonders 100 nm bis 1 µm.

9. Verfahren zur Herstellung der Co/Metalloxid/ZnS-Kompositteilchen nach einem der Ansprüche 1 bis 8, wobei das Metalloxid aus SiO₂, Al₂O₃, TiO₂ oder Mischungen davon ausgewählt ist, das die folgenden Schritte umfasst:
a. Aufbringen einer Co²⁺-haltigen Schicht auf ZnS-Teilchen durch Behandeln der ZnS-Teilchen mit einer Lösung eines Co-Salzes;
b. Zugeben von einer alkalischen Lösung einer Metalloxid-Vorläuferverbindung oder Mischungen davon,
c. Absenken des pH-Wertes der Suspension auf einen Bereich von pH 5 bis 8, optional gefolgt von einer Reifezeit von bis zu 120 min,
d. Kalzinieren der abfiltrierten und bevorzugt getrockneten Teilchen in einem Temperaturbereich von 400° bis 1000°C, optional gefolgt von einer Mahlung und/oder Sichtung der Teilchen.

10. Verfahren nach Anspruch 9, bei dem das Behandeln der ZnS-Teilchen mit der Lösung eines Co-Salzes und die Zugabe der alkalischen Lösung von Metalloxid-Vorläuferverbindungen in einem Schritt erfolgen.

11. Verfahren nach Anspruch 9, bei dem die Schritte a. und b. in der Reihenfolge vertauscht sind.

12. Verfahren nach einem der Ansprüche 9 bis 11, bei dem die ZnS-Teilchen in einer wässrigen Lösung oder als trockenes Pulver vorgelegt werden.

13. Verwendung der Co/Metalloxid/ZnS-Kompositteilchen gemäß einem der Ansprüche 1 bis 8 als Pigment in Formmassen, insbesondere in anorganischen und/ oder organischen Polymeren, daraus gefertigten Formteilen, sowie in Lithopone, Lacken, Farben, Fasern, Papier, Fugen- und Dichtungsmassen, Klebstoffen, Keramiken, Emaille, Adsorptionsmittel, Ionenaustauschern, Schleif- und Poliermitteln, Kühlschmierstoffen und Kühlschmierstoffkonzentraten, Feuerfestprodukten, Hartbetonstoffen, medizinischen Erzeugnissen und Kosmetika.

14. Verwendung der Co/ Metalloxid/ZnS-Kompositteilchen gemäß einem der Ansprüche 1 bis 8 zur Verbesserung der mechanischen und/oder optischen Eigenschaften von Werkstoffen, beispielsweise der Härte, der Biegefestigkeit, Schlagzähigkeit und Lichtbeständigkeit von Duromeren und thermoplastischen Kunststoffen, insbesondere Glasfaser-verstärkten Kunststoffen.

15. Verwendung der Co/Metalloxid/ZnS-Kompositteilchen gemäß einem der Ansprüche 1 bis 8 in Duromeren, thermoplastischen Kunststoffen und Elastomeren zur Stabilisierung gegen Wärme.

16. Werkstoff, insbesondere ein Glasfaser-verstärkter Kunststoff, enthaltend Co/Metalloxid/ZnS-Kompositteilchen nach einem der Ansprüche 1 bis 8.

## Claims

1. Co/metal oxide/ZnS composite particles having a ZnS core and a metal oxide coating surrounding the core, said coating having a content of cobalt from 1 to 150 ppm, based on the total weight of the composite particles, wherein the metal oxide is selected from SiO₂, TiO₂, Al₂O₃ or mixtures thereof.

2. The composite particles according to Claim 1, having a ZnS core and the metal oxide coating surrounding the core, wherein the core is cobalt-free.

3. The composite particles according to Claim 1 or 2, having a content of cobalt from 5 to 120 ppm, based on the total weight of the composite particles.

4. The composite particles according to Claim 1, 2 or 3, having the metal oxide coating in a mass from 0.1 to 10 % by weight, particularly 0.5 to 5 % by weight metal oxide, based on the total weight of the composite particles.

5. The composite particles according to Claim 4, having the metal oxide coating in a mass from 0.5 to 5 % by weight Al₂O₃, based on the total weight of the composite particles.

6. The composite particles according to Claim 4, having the metal oxide coating in a mass from 0.5 to 3 % by weight, particularly 1 to 2.5 % by weight SiO₂, based on the total weight of the composite particles.

7. The composite particles according to Claim 4, having the metal oxide coating in a mass from 0.5 to 3 % by weight Ti02, based on the total weight of the composite particles.

8. The composite particles according to any one of the preceding claims, having a particle size from 10 nm to 5 µm, particularly 100 nm to 1 µm.

9. A method for producing the Co/metal oxide/ZnS composite particles according to any one of Claims 1 to 8, wherein the metal oxide is selected from SiO₂, Al₂O₃, TiO₂ or mixtures thereof, said method comprising the following steps:
a. applying a Co²⁺-containing layer to ZnS particles by treating the ZnS particles with a solution of a Co salt;
b. adding an alkaline solution of a metal oxide precursor compound or mixtures thereof,
c. lowering the pH value of the suspension to a range from pH 5 to 8, optionally followed by a maturation period of up to 120 min,
d. calcining the filtered-off and preferably dried particles in a temperature range from 400° to 1000°C, optionally followed by a grinding and/or sifting of the particles.

10. The method according to Claim 9, in which the treatment of the ZnS particles with the solution of a Co salt and the addition of the alkaline solution of metal oxide precursor compounds are performed in one step.

11. The method according to Claim 9, in which the order of steps a. and b. is swapped.

12. The method according to any one of Claims 9 to 11, in which the ZnS particles are presented in an aqueous solution or as dry powder.

13. Use of the Co/metal oxide/ZnS composite particles according to any one of Claims 1 to 8 as a pigment in moulding compounds, in particular in inorganic and/or organic polymers, moulded articles fabricated therefrom, and also in lithopones, paints, dyes, fibres, paper, grouts and sealants, adhesives, ceramics, enamels, adsorbents, ion exchangers, abradants and polishes, cooling lubricants and cooling lubricant concentrates, refractory products, hard concrete materials, medical products and cosmetics.

14. Use of the Co/ metal oxide/ZnS composite particles according to any one of Claims 1 to 8 for improving the mechanical and/or optical properties of materials, for example the hardness, flexural strength, impact strength and light-fastness of thermoset materials and thermoplastics, in particular glass-fibre-reinforced plastics.

15. Use of the Co/metal oxide/ZnS composite particles according to any one of Claims 1 to 8 in thermoset materials, thermoplastics and elastomers for stabilisation with respect to heat.

16. A material, in particular a glass-fibre-reinforced plastics material, containing Co/metal oxide/ZnS composite particles according to any one of Claims 1 to 8.

## Revendications

1. Particules composites de Co/oxyde métallique/ZnS présentant un noyau en ZnS et un revêtement d'oxyde métallique entourant le noyau, présentant une teneur en cobalt de 1 à 150 ppm, par rapport au poids total des particules composites, l'oxyde métallique étant choisi parmi le SiO₂, TiO₂, Al₂O₃ ou leurs mélanges.

2. Particules composites selon la revendication 1, présentant un noyau en ZnS et un revêtement d'oxyde métallique entourant le noyau, le noyau étant exempt de cobalt.

3. Particules composites selon la revendication 1 ou 2, présentant une teneur en cobalt de 5 à 120 ppm, par rapport au poids total des particules composites.

4. Particules composites selon la revendication 1, 2 ou 3, présentant le revêtement d'oxyde métallique en une masse de 0,1 à 10% en poids, en particulier de 0,5 à 5% en poids, d'oxyde métallique, par rapport au poids total des particules composites.

5. Particules composites selon la revendication 4, présentant le revêtement d'oxyde métallique en une masse de 0,5 à 5% en poids d'Al₂O₃, par rapport au poids total des particules composites.

6. Particules composites selon la revendication 4, présentant le revêtement d'oxyde métallique en une masse de 0,5 à 3 % en poids, en particulier de 1 à 2,5% en poids, de SiO₂, par rapport au poids total des particules composites.

7. Particules composites selon la revendication 4, présentant le revêtement d'oxyde métallique en une masse de 0,5 à 3% en poids de TiO₂, par rapport au poids total des particules composites.

8. Particules composites selon l'une quelconque des revendications précédentes, présentant une grosseur de particule de 10 nm à 5 µm, en particulier de 100 nm à 1 µm.

9. Procédé pour la préparation des particules composites de Co/oxyde métallique/ZnS selon l'une quelconque des revendications 1 à 8, l'oxyde métallique étant choisi parmi le SiO₂, l'Al₂O₃, le TiO₂ ou leurs mélanges, qui comprend les étapes suivantes, consistant à :
a. appliquer une couche contenant du Co²⁺ sur des particules de ZnS par traitement des particules de ZnS avec une solution d'un sel de Co ;
b. ajouter une solution alcaline d'un composé précurseur d'oxyde métallique ou de mélanges correspondants,
c. abaisser de pH de la suspension à une plage de pH 5 à 8, éventuellement suivi d'un temps de maturation de jusqu'à 120 min,
d. calciner les particules séparées par filtration et de préférence séchées dans une plage de température de 400°C à 1000°C, éventuellement suivi d'un broyage et/ou d'un tamisage des particules.

10. Procédé selon la revendication 9, dans lequel le traitement des particules de ZnS par une solution d'un sel de Co et l'addition de la solution alcaline de composés précurseurs d'oxydes métalliques ont lieu dans une seule étape.

11. Procédé selon la revendication 9, dans lequel l'ordre des étapes a. et b. est inversée.

12. Procédé selon l'une quelconque des revendications 9 ou 11, dans lequel les particules de ZnS sont disposées au préalable dans une solution aqueuse ou sous forme de poudre sèche.

13. Utilisation des particules composites de Co/oxyde métallique/ZnS selon l'une quelconque des revendications 1 à 8 comme pigment dans des masses de moulage, en particulier dans des polymères inorganiques et/organiques, dans des pièces moulées fabriquées à partir de ceux-ci ainsi que dans des lithopones, des laques, des encres, des fibres, du papier, des masses de jointoiement et de bouchage, des adhésifs, des céramiques, des émaux, des agents d'adsorption, des échangeurs d'ions, des agents de meulage et polissage, des lubrifiants à froid et des concentrats de lubrifiants à froid, des produits ignifuges, des matériaux en béton dur, des produits médicaux et des cosmétiques.

14. Utilisation des particules composites de Co/oxyde métallique/ZnS selon l'une quelconque des revendications 1 à 8 pour améliorer les propriétés mécaniques et/ou optiques de matériaux, par exemple de la dureté, de la résistance à la flexion, de la résilience et de la résistance à la lumière de matériaux synthétiques thermodurcissables et thermoplastiques, en particulier de matériaux synthétiques renforcés par des fibres de verre.

15. Utilisation des particules composites de Co/oxyde métallique/ZnS selon l'une quelconque des revendications 1 à 8 dans des matériaux synthétiques thermodurcissables, thermoplastiques et des élastomères pour la stabilisation à la chaleur.

16. Matériau, en particulier matériau synthétique renforcé par des fibres de verre, contenant des particules composites de Co/oxyde métallique/ZnS selon l'une quelconque des revendications 1 à 8.
